# EUROPEAN PATENT APPLICATION

(11) **EP 4 668 380 A1**
(43) Date of publication of application: **24.12.2025**
(21) Application number: 24807506.1
(22) Date of filing: 13.05.2024
(51) Int. Cl.: H01M 10/04, C09J 7/25, H01M 50/105

(54) **ELECTRODE ASSEMBLY COMPRISING TAPE FOR FIXING EXTERIOR OF STACK AND SECONDARY BATTERY COMPRISING SAME**

(30) Priority: 12.05.2023 KR 20230061582; 10.05.2024 KR 20240061550
(71) Applicant: LG Energy Solution, Ltd., Seoul 07335 (KR)
(72) Inventor: NOH, Taegyun, Daejeon 34122 (KR); GWAK, Wooju, Daejeon 34122 (KR); LEE, Eui Kyung, Daejeon 34122 (KR)
(74) Representative: Goddar, Heinz J.
(86) International application number: PCT/KR2024/006459
(87) International publication number: WO 2024/237635

(57) **Abstract**

The present disclosure provides an electrode assembly comprising:
a laminate body including a positive electrode, a negative electrode, and a separator interposed between the positive electrode and the negative electrode, and one or more pairs of tapes for fixing the exterior of the laminate body,
wherein the pair of tapes includes non-overlapping portions that do not overlap with each other, and overlapping portions that overlap with each other, and
wherein a width of the non-overlapping portions is larger than a width of the overlapping portions, and a secondary battery comprising the same.

## Description

### [TECHNICAL FIELD]

### Cross Citation with Related Application(s)

This application claims the benefit of Korean Patent Application No. 10-2023-0061582 filed on May 12, 2023 and Korean Patent Application No. 10-2024-0061550 filed on May 10, 2024 in the Korean Intellectual Property Office, the disclosures of which are incorporated herein by reference in their entirety.

The present disclosure relates to an electrode assembly comprising a tape for fixing the exterior of a laminate body and a secondary battery comprising the same.

### [BACKGROUND]

Due to the rapid increase in the use of fossil fuels, the demand for the use of alternative energy or clean energy is increasing, and as part thereof, the fields that are being studied most actively are the fields of power generation and power storage using electrochemistry.

Currently, a secondary battery is a representative example of an electrochemical device that utilizes such electrochemical energy, and the range of use thereof tends to be gradually expanding.

Recently, with the increase of the technological development and demand for mobile devices such as portable computers, portable phones, and cameras, demand for secondary batteries as an energy source rapidly increases. Among such secondary batteries, many studies have been conducted on a lithium secondary battery that exhibits high charging/discharging characteristics, has a long cycle life, and is eco-friendly, and has been commercialized and widely used.

Moreover, the secondary batteries have recently been developed into a configuration capable of increasingly high energy density and high output according to the request from the user, but in this case, there is a problem that safety becomes low.

In particular, gas generation in the activation process showed an increasing tendency with increasing energy density of the secondary batteries, and accordingly, a technology of applying uniform pressure which discharges the generated gas at an early stage was requested.

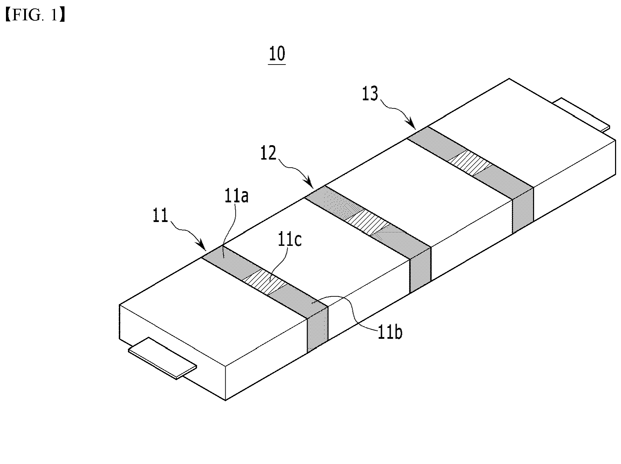

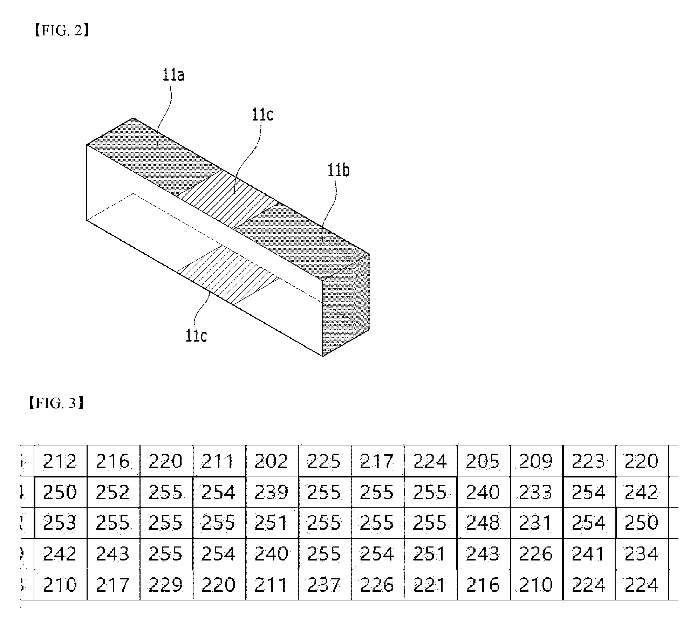

However, referring to FIGS. 1 and 2, in the case of a conventional stacked-type, stack-folding type, or stack-lamination type electrode assembly 10, tapes 11, 12 and 13 for fixing components are attached to the exterior of the electrode assembly 10. Each of such tapes 11, 12 and 13 is configured in a pair, and an overlapping portion 11c where the unit tapes 11a and 11b overlap with each other exists as shown in an enlarged view of FIG. 2.

However, when gas is generated in the activation process, the tapes 11, 12 and 13 exert a force in a direction opposite to the direction in which the gas is generated and discharged. Therefore, the applied pressure at the portion where the tapes 11, 12 and 13 are located is higher than the case where it is not so, and this becomes larger at the overlapping portion 11c. The same applies even at the time of applying pressure for discharging gas.

FIG. 3 shows a table of an applied pressure measured by a pressure sensor to show that the applied pressure at the overlapping portion acts more strongly in other areas for a secondary battery using an electrode assembly with the same structure as in FIG. 1 (the area of the overlapping portion of the tape exceeds 20%).

Specifically, while carrying out an activation process in which the manufactured secondary battery is charged to 4.35V/38mA at 1C under constant current/constant voltage (CC/CV) conditions at 25°C, and then discharged to 2.5V at 2C under constant current (CC) conditions, the pressure applied to each location during the activation process is confirmed using a pressure sensor (Kitronik Ltd.) that electronically measures the pressure applied to the secondary battery, and the pressure index value is expressed numerically based on the central portion of the secondary battery.

Referring to FIG. 3, it can be confirmed that the pressure at the overlapping portion of the tapes increases significantly compared to that in other areas, and that the area of the portion where the pressure is largely increased and marked in red is wide.

Therefore, since the applied pressure at the overlapping portion 11c acts more largely than the applied pressure in areas other than the overlapping portion 11c, the nonuniformity of an applied pressure in the medium or large-sized battery becomes greater, whereby gas is gathered in a portion where the applied pressure is not high, which plays a role in obstructing smooth discharge of gas.

Therefore, there is an urgent need to develop a secondary battery that can smoothly discharge gas generated in the activation process of the secondary battery, thereby enhancing safety.

### [DETAILED DESCRIPTION OF THE INVENTION]

### [Technical Problem]

It is an object of the present disclosure to provide a secondary battery which minimizes the area nonuniformly pressurized by a tape for fixing the exterior of an electrode assembly and thus smoothly performs the discharge of gases generated in an activation process, thereby improving safety.

### [Technical Solution]

In order to achieve the above object, according to one embodiment of the present disclosure, there is provided an electrode assembly comprising:
a laminate body including a positive electrode, a negative electrode, and a separator interposed between the positive electrode and the negative electrode, and one or more pairs of tapes for fixing the exterior of the laminate body,
wherein the pair of tapes includes non-overlapping portions that do not overlap with each other, and overlapping portions that overlap with each other, and
wherein a width of the non-overlapping portions is larger than a width of the overlapping portions.

Specifically, the pair of tapes are composed of two or more unit tapes, wherein the unit tapes may include a central portion and a tapered portion having a tapered structure in which the width decreases from the central portion toward both end portions.

In this case, the tapered portion may have a structure in which the width gradually decreases toward both end portions. More specifically, the projection of the tapered portion in the laminate body may have a triangular, trapezoidal, or semicircular shape.

Thereby, the total area of the overlapping portion may be 1% to 20% of the total area surrounded by the pair of tapes.

In one example, the pair of tapes may be composed of two unit tapes.

Further, the overlapping portion may be located on the upper surface, or the lower surface, or both the upper surface and the lower surface based on the laminating direction of the laminate body.

In another specific example, the pair of tapes includes two or more pairs, wherein the two or more pairs of tapes may be attached so as to fix the exterior of the laminate body at intervals of 1 to 4 times the thickness of the laminate body.

Specifically, the two or more pairs of tapes may be formed such that the distance between them is constant. More specifically, respective areas divided by the two or more pairs of tapes on the upper surface of the laminate body may be identical.

Further, the width of the pair of tapes may be 10 mm to 50 mm.

Therefore, the total area surrounded by the one or more pairs of tapes may be 10% to 40% of the total surface area of the laminate body.

Meanwhile, the pair of tapes may include polyimide.

Furthermore, according to one embodiment of the present disclosure, there is provided a secondary battery comprising the electrode assembly, an electrolyte, and a battery case for housing the electrode assembly and electrolyte.

In this case, the secondary battery may be a pouch-type secondary battery.

### [BRIEF DESCRIPTION OF THE DRAWINGS]

FIG. 1 is a perspective view of a conventional electrode assembly.
FIG. 2 is an enlarged schematic diagram of the tapes of FIG. 1.
FIG. 3 is a table showing the applied pressure during an activation process of a secondary battery using a conventional fixing tape, as measured with a pressure sensor.
FIG. 4 is a perspective view of an electrode assembly according to an embodiment of the present disclosure.
FIG. 5 is an enlarged schematic diagram of a pair of tapes in FIG. 4.
FIG. 6 is a table showing the applied pressure during an activation process of a secondary battery using the present tape, as measured with a pressure sensor.

### [DETAILED DESCRIPTION OF THE EMBODIMENTS]

Hereinafter, specific embodiments will be described in more detail for a better understanding of the present disclosure.

Terms or words used in the specification and the appended claims should not be construed as limited to ordinary or dictionary meanings, and the present disclosure should be construed with meanings and concepts that are consistent with the technical idea of the present disclosure based on the principle that the inventors may appropriately define concepts of the terms to appropriately describe their own invention in the best way.

The technical terms provided herein are merely used for the purpose of describing particular embodiments, and is not intended to be limiting of the present disclosure. The singular forms "a," "an," and "the" are intended to include the plural forms as well, unless the context clearly indicates otherwise.

Further, throughout the specification, when a portion is referred to as "including" or "comprising" a certain component, it means that the portion can further include other components, without excluding the other components, unless otherwise stated.

An electrode assembly according to one embodiment of the present disclosure comprises:
a laminate body including a positive electrode, a negative electrode, and a separator interposed between the positive electrode and the negative electrode, and one or more pairs of tapes for fixing the exterior of the laminate body,
wherein the pair of tapes includes non-overlapping portions that do not overlap with each other, and overlapping portions that overlap with each other, and
wherein a width of the non-overlapping portions is larger than a width of the overlapping portions.

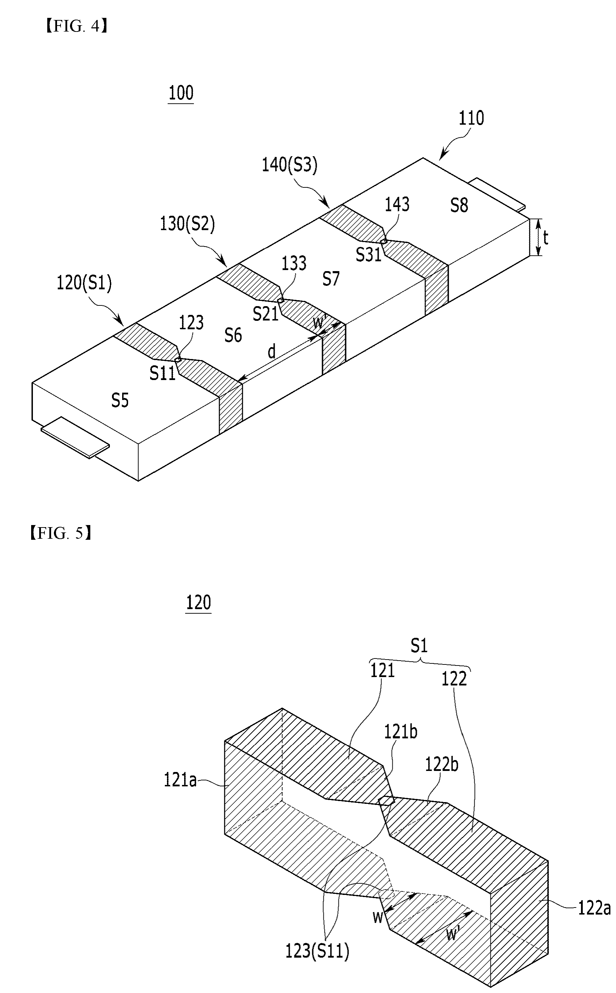

FIG. 4 schematically shows a perspective view of an electrode assembly according to one embodiment of the present disclosure, and FIG. 5 shows an enlarged schematic diagram of a pair of tapes in FIG. 4.

Referring to FIG. 4, the electrode assembly 100 according to one embodiment of the present disclosure has a structure comprising: a laminate body 110 including a positive electrode, a negative electrode, and a separator interposed between the positive electrode and the negative electrode, and three pairs of tapes 120, 130 and 140 for fixing the exterior of the laminate body 110.

At this time, referring to FIGS. 4 and 5 together, the pairs of tapes 120, 130 and 140 include non-overlapping portions that do not overlap with each other, and overlapping portions 123, 133 and 143 that overlap with each other, and the width of the overlapping portions 123, 133 and 143 is smaller than the width of the non-overlapping portions.

More specifically, referring to FIG. 5, in order to reduce the area S11 of the overlapping portion 123, the pair of tapes 120 are composed of two unit tapes 121 and 122, wherein the unit tapes 121 and 122 include central portions 121a and 122a and tapered portions 121b and 122b having a tapered structure in which the width (w) decreases from the central portions 121a and 122a toward both end portions.

In this case, the tapered portions 121b and 122b may have a structure in which the width (w) gradually decreases toward both end portions. In terms of the shape, the projection of the tapered portions 121b and 122b may have a triangular, trapezoidal, or semicircular shape, and specifically, it may be trapezoidal as shown in FIG. 4.

Therefore, when the unit tapes 121 and 122 are paired to surround the exterior of the laminate body 110, the overlapping portions 123 are formed at both ends of the tapered portions 121 b and 122b, and the area S11 of the overlapping portions 123 is smaller than when a tape having no tapered portions 121b and 122b is used.

Therefore, the areas S11, S21 and S31 of the overlapping portions 123, 133 and 143 are reduced, so that comparing a portion where the pair of tapes 120, 130 and 140 is not formed with a non-overlapping portion, the area of the portion where an applied pressure is highest can be reduced, which can reduce nonuniformity of an applied pressure and thus achieve the effect intended by the present application.

At this time, the total areas S11, S21 and S31 of the overlapping portions 123, 133 and 143 may be 1% to 20% based on the total areas S1, S2 and S3 surrounded by the pair of tapes 120, 130 and 140.

Specifically, the total areas S11, S21 and S31 of the overlapping portions 123, 133 and 143 may be 2% to 15%, more specifically 3% to 10%, based on the total areas S1, S2 and S3 surrounded by the pair of tapes 120, 130 and 140.

If the area is too large outside the above range, there is a problem that as explained in the Background Art, an applied pressure at the overlapping portion acts greatly as in a conventional electrode assembly, thereby increasing nonuniformity of an applied pressure and thus obstructing smooth discharge of gas. If the area is too small, the portion where a pair of tapes are bonded to each other is reduced, so that the adhesive strength is reduced and the original purpose of using the tapes, that is, the fixing power of the laminate body, may decrease, which is not preferable.

In FIGS. 4 and 5, a pair of tapes 120, 130 and 140 consisting of two unit tapes 121 and 122 is illustrated, but are not limited thereto, and a pair of tapes 120, 130 and 140 may include three or more unit tapes. That is, a pair herein means a bundle of tapes which wind around the laminate body at the same position, and does not necessarily mean two pairs of unit tapes. Therefore, the number of the unit tapes is not limited, but it preferable that the area of the overlapping portion is reduced, and thus, specifically, it is more preferable to comprise two unit tapes.

Further, referring again to FIG. 4, the overlapping portions 123, 133 and 143 of a pair of tapes 120, 130, and 140 comprising unit tapes may be located on an upper surface, or a lower surface, or both an upper surface and a lower surface based on the laminating direction of the laminate body 110. That is, when the overlapping portions 123, 133 and 143 are formed in one number in the respective pair of tapes 120, 130 and 140, they may be formed on the upper surface or the lower surface based on the laminating direction of the laminate body 110, and when the overlapping portions 123, 133 and 143 are formed in two numbers, they may be located on the upper surface and the lower surface of the laminate body 110 based on the laminating direction.

That is, since the overlapping portions 123, 133 and 143 are preferably formed on a flat surface of the laminate body 110, they may be formed on the upper surface, or the lower surface, or both the upper surface and the lower surface, and the side surface of the laminate body 110 make it difficult to adhere a pair of tapes 120, 130 and 140 because the sizes of a positive electrode, a negative electrode and a separator are different from each other. Therefore, it is more preferable to surround them with one unit tape for the sake of fixing force.

Meanwhile, FIG. 4 illustrates a configuration including three pairs of tapes 120, 130 and 140, but one pair may be included, and for the fixing force of the laminate body 110, two or more pairs may be included. However, considering the fixing force of the laminate body 110, and the nonuniformity of an applied pressure due to the use of tape, it is preferable to include specifically 2 pairs or 3 pairs, more specifically 3 pairs.

Meanwhile, when two or more pairs of tapes 120, 130 and 140 are included in this way, the distance (d) at which the pair of tapes 120, 130 and 140 are spaced from each other may be 1 to 4 times the thickness (t) of the laminate body 110, and the tapes may be attached so as to fix the exterior of the laminate body 110.

More specifically, the distance (d) between the pair of tapes 120, 130 and 140 may be attached so as to fix the exterior of the laminate body 110 at the interval of 2 to 3 times the thickness (t) of the laminate body 110.

If the tapes are formed too densely outside the above range, the area surrounded by the tape increases as a whole, so that gas discharge is not smooth or is biased in one direction, which may cause a problem that nonuniformity of an applied pressure occurs more largely. If the distance is formed to be too large, the fixing force of the laminate body may be reduced, which is not preferable.

Further, in such a case, the two or more pairs of tapes 120, 130 and 140 may be formed such that the distance of separation between them is constant. More specifically, the respective areas divided by the two or more pairs of tapes 120, 130 and 140 on the upper surface of the laminate body may be identical (S5=S6=S7=S8).

Further, the width (w') of the pair of tapes 120, 130 and 140 may be 10 mm to 50 mm, specifically 10 mm to 40 mm, and more specifically 20 mm to 40 mm.

Here, the width (w') may be based on the width at the non-overlapping portion of the pair of tapes 120, 130 and 140.

If the width is too thin outside the above range, the fixing force of the laminate body decreases, and if the width is too large, the area surrounded by the tape increases as a whole, and gas discharge may not be smooth, which is not preferable.

Similarly, the area S1+S2+S3 surrounded by one or more pairs of tapes 120, 130 and 140 may be 10% to 40%, specifically 10% to 30%, and more specifically 15% to 20%, of the total surface area of the laminate body.

If the pair of tapes are surrounded by too large area outside the above range, the area surrounded by the tapes increases as a whole, so that gas discharge is not smooth or is biased in one direction, which may cause a problem that nonuniformity of an applied pressure occurs more largely. If the tapes are surrounded by too small area, the fixing force of the laminate body may be reduced, which is not preferable.

Meanwhile, the two or more pairs of tapes according to the present application may include polyimide, which may be specifically polyimide tapes.

Polyimide (PI) is a polymer material having a thermal stability based on a rigid aromatic main chain, and has excellent mechanical strength, chemical resistance, weather resistance and heat resistance based on the chemical stability of the imide ring. In addition, it also has excellent electrical properties such as insulation properties and low dielectric constant.

In terms of the heat resistance, polyimide exhibits little shape deformation and can maintain high physical strength up to about 400°C, exceeding 120°C to 180°C which is the heat resistance temperature range of a commercial separator. Therefore, the polyimide tape containing polyimide as a main material can effectively control the shape deformation of the laminate body even under high temperature conditions.

More specifically, the pair of tapes may be adhesive tapes which comprise a functional layer containing polyimide and an adhesive layer containing an adhesive material on one surface of the functional layer. Since the pair of tapes are closely adhered to the surface of the laminate body by the adhesive layer, the pair of tapes can be prevented from being separated from the laminate body.

Meanwhile, the laminate body may be a stacked-type, a stack-folding type, or a stack-lamination type, and specifically, it may be a stacked-type, or a stack-lamination type.

A stacked-type laminate body is manufactured in such a manner that a positive electrode and a negative electrode are alternately arranged and a separator is interposed between the positive electrode and the negative electrode.

The stack-folding type laminate body is manufactured by arranging unit cells in which at least one positive electrode and at least one negative electrode are laminated with a separator interposed therebetween on a separator film and then winding them.

Finally, the stack-lamination type laminate body is one in which lamination is further performed on the stacked-type laminate body, and has a stronger bonding between components. In addition, for example, in order to increase the lamination process efficiency of the stack-lamination type laminate body, after preparing a unit cell as mentioned in the stack-folding type laminate body, a plurality of unit cells can be laminated to manufacture a battery having a desired level of capacity. The lamination order or number of electrodes within a unit cell and the lamination order or number of a plurality of unit cells can be appropriately adjusted in accordance with the type, capacity, and purpose of the battery.

Furthermore, according to yet another embodiment of the present disclosure, there is provided a secondary battery comprising the electrode assembly, an electrolyte, and a battery case for housing the electrode assembly and the electrolyte.

At this time, detailed descriptions of the positive electrode, the negative electrode, the separator and the electrolyte included in the electrode assembly are the same as known in the art, and therefore, will be omitted in this specification.

The secondary battery may be a prismatic, cylindrical, or pouch-type secondary battery depending on the battery case, but specifically, it may be a pouch-type secondary battery so as to correspond to the type of the laminate body.

Further, the secondary battery may be a lithium secondary battery including a lithium metal secondary battery, a lithium ion secondary battery, a lithium polymer secondary battery, a lithium ion polymer secondary battery or the like, depending on the type of active material and electrolyte. Specifically, the secondary battery may be a lithium ion secondary battery.

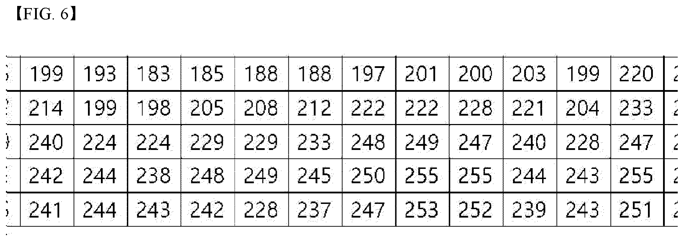

In order to show the effect of the present disclosure, FIG. 6 illustrates a table of an applied pressure measured by a pressure sensor to show that the applied pressure acts uniformly over most of the area of a secondary battery using an electrode assembly having a structure as shown in FIG. 4 (the overlapping area of the tape is about 10%).

Specifically, while carrying out an activation process in which the manufactured secondary battery is charged to 4.35V/38mA at 1C under constant current/constant voltage(CC/CV) conditions at 25°C, and then discharged to 2.5V at 2C under constant current (CC) conditions, the pressure applied to each location during the activation process is confirmed using a pressure sensor (Kitronik Ltd.) that electronically measures the pressure applied to the secondary battery, and the pressure index value is expressed numerically based on the central portion of the secondary battery.

Referring to FIG. 6, it can be confirmed that the area of the overlapping portions of the tapes is very small, so the applied pressure is distributed uniformly over a wider range than before, and that the area of the portion where the pressure index value shows the highest point of 255 is clearly reduced.

Therefore, it can be expected that the nonuniformity of an applied pressure in the medium or large-sized battery is reduced, which thus plays a role in obstructing smooth discharge of gas as a whole.

It will be apparent to those skilled in the art that various modifications and variations can be made in the present disclosure without departing from the spirit and scope of the present disclosure.

### [Industrial Applicability]

As set forth above, according to the present disclosure, it is possible to minimize the area where one or more pairs of tapes for fixing the exterior of the laminate body overlap with each other, whereby comparing a portion where the tapes are not formed with a non-overlapping portion of one or more pairs of tapes, it is possible to reduce the area where an applied pressure is increased. Therefore, it is possible to reduce nonuniformity of an applied pressure, which may smoothly perform the discharge of gases generated in the activation process and thus improve safety.

## Claims

1. An electrode assembly comprising:
a laminate body including a positive electrode, a negative electrode, and a separator interposed between the positive electrode and the negative electrode, and one or more pairs of tapes for fixing the exterior of the laminate body,
wherein the pair of tapes includes non-overlapping portions that do not overlap with each other, and overlapping portions that overlap with each other, and
wherein a width of the non-overlapping portions is larger than a width of the overlapping portions.

2. The electrode assembly according to claim 1, wherein:
the pair of tapes are composed of two or more unit tapes, wherein the unit tapes include a central portion and a tapered portion having a tapered structure in which the width decreases from the central portion toward both end portions.

3. The electrode assembly according to claim 2, wherein:
the tapered portion has a structure in which the width gradually decreases toward both end portions.

4. The electrode assembly according to claim 2, wherein:
the projection of the tapered portion in the laminate body has a triangular, trapezoidal, or semicircular shape.

5. The electrode assembly according to claim 1, wherein:
the total area of the overlapping portion is 1% to 20% of the total area surrounded by the pair of tapes.

6. The electrode assembly according to claim 1, wherein:
the pair of tapes are composed of two unit tapes.

7. The electrode assembly according to claim 1, wherein:
the overlapping portion is located on an upper surface, or a lower surface, or both an upper surface and a lower surface based on the laminating direction of the laminate body.

8. The electrode assembly according to claim 1, wherein:
the pair of tapes includes two or more pairs, wherein the two or more pairs of tapes are attached so as to fix the exterior of the laminate body at intervals of 1 to 4 times the thickness of the laminate body.

9. The electrode assembly according to claim 8, wherein:
the two or more pairs of tapes are formed such that the distance between them is constant.

10. The electrode assembly according to claim 8, wherein:
respective areas divided by the two or more pairs of tapes on the upper surface of the laminate body are identical.

11. The electrode assembly according to claim 1, wherein:
the width of the pair of tapes is 10 mm to 50 mm.

12. The electrode assembly according to claim 1, wherein:
the total area surrounded by the one or more pairs of tapes is 10% to 40% of the total surface area of the laminate body.

13. The electrode assembly according to claim 1, wherein:
the pair of tapes includes polyimide.

14. A secondary battery comprising the electrode assembly according to claim 1, an electrolyte, and a battery case for housing the electrode assembly and electrolyte.

15. The secondary battery according to claim 14, wherein:
the secondary battery is a pouch-type secondary battery.
